# EUROPEAN PATENT APPLICATION

(11) **EP 1 293 911 A1**
(43) Date of publication of application: **19.03.2003**
(21) Application number: 01120096.1
(22) Date of filing: 21.08.2001
(51) Int. Cl.: G06F 17/30, G11B 27/031, G11B 27/28

(54) **Method and apparatus for generating editing-related metadata**

(71) Applicant: DEUTSCHE THOMSON-BRANDT GMBH, 78048 Villingen-Schwenningen (DE)
(72) Inventor: Winter, Marco, 30173 Hannover (DE)
(74) Representative: Thies, Stephan

(57) **Abstract**

For editing a recorded video and/or audio signal, editing-related metadata (5) representing a possible disturbance of a section of the recorded signal are generated (4) and stored (6) during the recording of the video and/or audio signal (1). The editing-related metadata can be used during reproduction of the recorded video and/or audio signal to correct a disturbance. The video and/or audio signal is analyzed (4) during recording for the generation of said editing-related metadata and the generated editing-related metadata allow access (7) of the location of the recorded section comprising the possible disturbance. E.g. for speeding up the offline editing of self-recorded audio and video recordings.

## Description

The invention relates to a method for generating editing related metadata for a video and/or audio signal, to a method for editing a recorded video and/or audio signal using editing related metadata and to corresponding apparatuses.

### Background

For editing of videos recorded with a video camera a variety of software or hardware solutions and combinations thereof exist, especially since digital camcorder have become affordable. After transferring the footage to a computer, e.g. via a FireWire (also known as IEEE 1394 or i.LINK) cable connecting the camcorder and a corresponding interface board in the computer, and storing it on a harddisc drive, editing, compositing and animation of the video is possible using a graphical user interface. The processed video can finally be stored, e.g. on a videotape, CD or DVD.

If the user intents to cut out bad recording parts like e.g. under-exposed scenes, then he has to search through the whole recorded video stream in order to detect the appropriate recording parts. Although a fast forward or fast reverse trick mode can be used for that purpose, this editing is still time consuming and annoying for the user.

It is known from EP-A-0456672 to record a signal representing the movement of a camcorder together with the video signal. This movement signal can be used during reproduction to correct disturbances in the video signal due to unintentional shocks. A movement detector associated with the camera generates the movement signal. During reproduction the video signal is supplied to a compensator for modifying the video signal. As the video signal and the movement signal are simultaneously recorded, a delay stage is used for the video signal which allows the compensator to know the movement for a certain video section before this specific video section is reproduced. However, although the disclosed generation of a separate movement signal during recording simplifies the post-processing of blurring, finding the disturbed video section still takes at lot of time as the movement signal has to be evaluated sequentially. Furthermore, this system allows only to detect and correct disturbances of the video signal due to unintentional shocks but no other disturbances.

EP-A-0851680 discloses to generate auxiliary data during recording of video information using a video camera and using said auxiliary data for editing. A start and stop time of a scene are generated corresponding to the switching on and off of a recording by an operator of the video camera. Furthermore, a compressed still picture reflects the video content at the start of the scene. Finally, an OK/NG marking signal marks while an object is photographed whether a subject scene is OK or NG through switching of an OK/NG judgement switch based on the operator's judgement. These editorial data are recorded and are displayed at the edition time, thus making it possible to search for a position of a necessary scene promptly without reproducing the video tape from the start to the end. However, this system is restricted to the assembly of selected scenes from many scenes to form a program and does not at all allow the automatic detection of disturbances of the video signal.

### Invention

Therefore, a problem to be solved by the invention is to generate auxiliary data for a video and/or audio signal, which allow to reduce the time effort for editing arbitrary disturbances or failures. This problem is solved by the method disclosed in claim 1.

According to this first aspect of the invention a video and/or audio signal is received and successive parts of said video and/or audio signal are analyzed for the automatic detection of a probably disturbed or failed section. Editing related metadata representing a detected probably disturbed or failed section of said video and/or audio signal are generated and stored, wherein said editing related metadata comprise the location of said detected probably disturbed or failed section within said video and/or audio signal.

A further problem to be solved by the invention is to reduce the time effort for editing arbitrary disturbances or failures of a recorded video and/or audio signal. This problem is solved by the method disclosed in claim 10.

According to this second aspect of the invention editing related metadata representing a probably disturbed or failed section of a recorded video and/or audio signal are read, wherein said editing related metadata have been generated during recording of said recorded video and/or audio signal and comprise the location of said probably disturbed or failed section within said recorded video and/or audio signal. The disturbed or failed section of said video and/or audio signal is accessed by using said editing related metadata and edited.

Corresponding apparatuses that utilize these methods are disclosed in claims 15 and 16, respectively.

Further advantageous embodiments of the invention result from the following description.

### Drawing

Exemplary embodiments of the invention are described with reference to the accompanying drawing, which shows in:

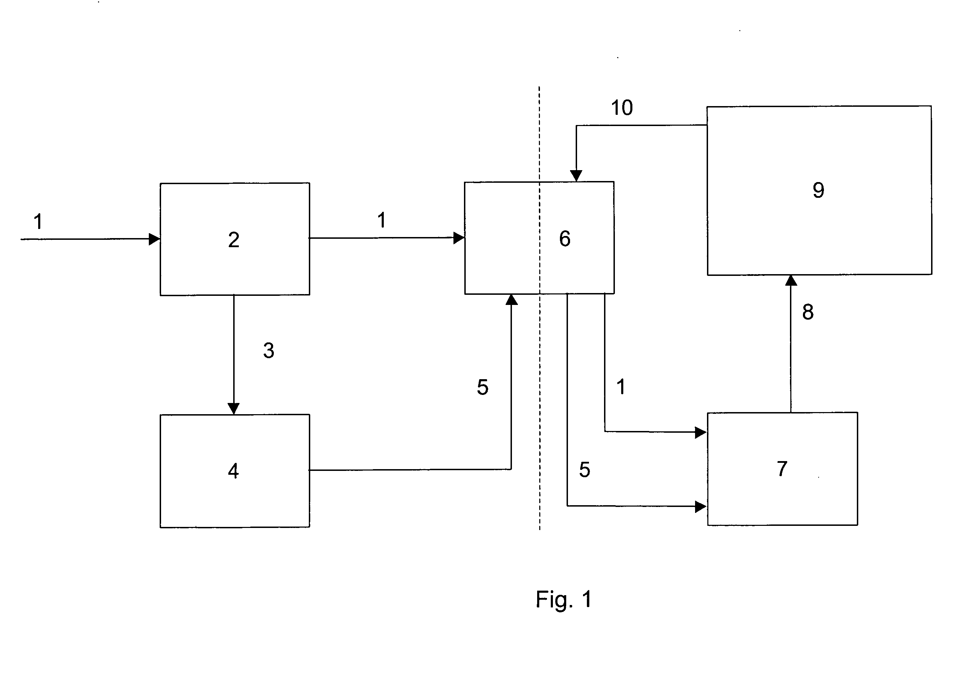

- Fig. 1: schematically the processes of collecting editing related metadata during recording and using the data for editing the recorded data.

### Exemplary embodiments

Fig. 1 shows schematically the processes of collecting editing related metadata during recording and using these data for editing the recorded data, symbolically separated by a dotted line.

An incoming data stream 1, e.g. a MiniDV signal representing a video signal with an accompanying audio signal, is analyzed for detecting critical content, i.e. probably disturbed or failed sections of said video and audio signal, in a first step 2. Information 3 about the location and type of the detected critical content is collected in a following step 4 and metadata 5 comprising this information are generated. The metadata 5 as well as the unchanged data stream 1 are recorded in a following step 6, either on the same medium or on separate media, wherein only few additional memory is required for storing the editing related metadata.

For a user controlled post-editing of the recorded data stream both the recorded content 1 and the recorded metadata 5 assigned to the critical content are read from the recording medium and are evaluated to access the critical parts in a further step 7. The data representing the critical parts 8 are then presented to the user for the editing process in a further step 9. Finally, the edited data stream 10 is stored again, either on the medium comprising the original data or on a different device.

Depending on the editing process it is also possible to replace only the critical parts of the data stream with the respective edited data. Also, instead of replacing the data, these data can simply be deleted if a correction of the critical parts is not possible. This is especially useful, if the recorded data are stored on a storage medium allowing direct access to arbitrary storage locations like an optical disc or a hard disc, because an uninterrupted playback of the data stream over the deleted data area is then easily possible.

The metadata can be stored on the recording medium together with the video and/or audio data but also at another location, e.g. at an external data base. For example for a camcorder using a cassette the metadata can be stored on the tape, but also on a chip attached to the cassette.

The user may use metadata for a fast access to the location of critical parts during a post editing session. This "bad content scan" allows the user to quickly find many critical parts of the recording. The critical parts of the-video and/or audio signal can be reproduced, e.g. displayed on a television screen or a computer monitor. The respective sections of said video and/or audio signal may be reproduced one after the other, either automatically or in response to a respective input from the user. A correction can be performed immediately after the reproduction of each section, if necessary. However, it is also possible that the user may first of all distinguish for each section between disturbed or failed sections and intended breaks or deviations to the average content like scene changes or a take of a sunset. Sections marked by the user for the further processing as being in fact disturbed or failed are then corrected if possible.

Depending on the detected errors or deviations to the average content the correction can be performed automatically or manually. While an automatic correction is much faster, a manual correction may sometimes be necessary in order to get better results, e.g. for adjusting the exposure of a sunset take, which an automatic correction could delete because of a presumable underexposure.

The metadata comprise:
- The location of the start and end of the respective recorded critical part (e.g. sector or packet number or a timestamp) ;
- A description of the critical content;
- Optional the location of one or more previous recorded critical recording parts of the same type and/or of other types;
- Optional an absolute and/or a relative time stamp of the start and/or the end of the recorded critical part;
- Optional an absolute and/or a relative time stamp of the start and optional the duration of the recorded critical part.

The metadata may be stored:
- Inside the recorded stream itself, e.g. as a user defined SI information of an MPEG II transport stream;
- Inside special navigation information of an application, e.g. inside the navigation information file of a DVR device;
- In a data base.

Various kinds of critical content can be detected using the respective given detection method:

Disturbed signal:
- Recognize blurred video recording parts via analyzing motion vectors: a homogeneous distribution of short motion vectors over the whole screen and a varying direction over a short duration could indicate a blurred video recording;
- Strong and sudden camera movings (rotations): a homogeneous distribution of long motion vectors over the whole screen and a short duration of this motion could indicate a not intended camera moving;
- Bad strong audio noise detection: suddenly appearing strong audio level noise could indicate a not intended noise recording;
- Annoying audio crack and crackling detection: cracks and crackling detection in general are already known;
- Not enough light during recording: bad luminance values over the whole screen for a longer time may indicate a too bad recording because of too less environment light.

Failed section of the video and/or audio signal:
- Find boring video scenes: analyze moving inside a video sequence and detect the motion vectors. If the motion vectors over the whole screen are small over the whole screen and over a longer duration (e.g. >10 seconds) then this could indicate a boring scene;
- Bad video recordings, because the recorded people aren't completely covered by the recorded view: use pattern recognition to recognize such content related annoying recorded parts.

A typical scenario example for using the invention could be:
- The consumer uses his camcorder to record video streams during his vacation trip. For each take the camcorder stores additional metadata for each detected critical take part, if any.
- The consumer ends his trip and arrives at home. He changes the recording medium from his camcorder to his local device.
- The consumer changes his local device to a special editing mode. The consumer is now able to jump one after the other to all the recorded critical recordings by using the location information included in the editing metadata. This can be implemented very user-friendly, e.g. the critical recordings can be accessed via a single button located on the remote control or the device itself or a displayed button as part of a graphical user interface. The consumer decides how to handle such critical parts. Optional the device proposes some simple actions like removing the whole critical part.
- The consumer has now corrected takes.

The invention is applicable to all kinds of video and audio recordings and can especially be used for supporting the offline editing of self recorded audio and video recordings. It is also useable for post processing of streaming media content, e.g. for video/audio streams received via internet. In this case in a first automatic step, which can be performed online or offline, the device analyzes the content and detects the critical parts. In a second step the device presents the consumer the detected parts. During the second step the consumer decides how to handle the found parts.

The inventive generation of editing related metadata can be implemented in any kind of recording device for video and/or audio signals, especially in arbitrary camcorders or professional video cameras. The inventive editing using the editing related metadata can be implemented in arbitrary video post-processing hardware but also in video post-processing software, which is run on a computer.

## Claims

1. Method for generating editing related metadata for a video and/or audio signal, comprising:
receiving (1) a video and/or audio signal;
analyzing (2) successive parts of said received video and/or audio signal for the automatic detection of a probably disturbed or failed section of said video and/or audio signal;
generating (4) editing related metadata (5) representing a detected probably disturbed or failed section of said video and/or audio signal, wherein said editing related metadata comprise the location (3) of said detected probably disturbed or failed section within said video and/or audio signal; and
storing (6) said editing related metadata.

2. Method according to claim 1, wherein said editing related metadata are generated (4) and stored (6) during recording of said video and/or audio signal.

3. Method according to claim 1 or 2, wherein said editing related metadata (5) comprise the start and end (3) of the probably disturbed or failed section or the start and the duration (3) of the probably disturbed or failed section.

4. Method according to any of the preceding claims, wherein said editing related metadata (5) comprise a description (3) of the probable disturbance or failure.

5. Method according to any of the preceding claims, wherein said video and/or audio signal (1) and said editing related metadata (5) are recorded (6) on the same storage medium.

6. Method according to claim 5, wherein said editing related metadata (5) are stored inside the recorded video and/or audio stream itself.

7. Method according to claim 5, wherein said editing related metadata (5) are stored inside special navigation information of an application.

8. Method according to claim 5, wherein said editing related metadata (5) are stored in a data base.

9. Method according to any of the preceding claims, wherein said probably disturbed or failed section is automatically detected using one or more of the following analyzing methods:
- analyzing motion vectors, wherein a homogeneous distribution of short motion vectors over the whole screen and a varying direction over a short duration indicates a blurred video recording;
- analyzing motion vectors, wherein a homogeneous distribution of long motion vectors over the whole screen and a short duration of this motion indicates a not intended camera moving;
- detecting suddenly appearing strong audio level noise, which indicates a not intended noise recording;
- detecting audio cracks and crackling;
- detecting low luminance values over the whole screen for a longer time indicates too less environment light;
- analyzing motion vectors, wherein small motion vectors over the whole screen for a longer time duration indicate a boring scene;
- recognizing recordings where recorded people are not completely covered by using pattern recognition.

10. Method for editing a recorded video and/or audio signal using editing related metadata, comprising:
reading (7) editing related metadata (5) representing a probably disturbed or failed section of a recorded video and/or audio signal (1), wherein said editing related metadata have been generated during recording of said recorded video and/or audio signal and comprise the location of said probably disturbed or failed section within said recorded video and/or audio signal;
accessing (7) the probably disturbed or failed section (8) of said recorded video and/or audio signal (1) by using said editing related metadata (5); and
editing (9) said probably disturbed or failed section of said recorded video and/or audio signal.

11. Method according to claim 10, further comprising:
reproducing the probably disturbed or failed section of said video and/or audio signal or a characteristic part of said section; and
receiving an information corresponding to an user input regarding the editing of said section.

12. Method according to claim 11, wherein the probably disturbed or failed section of said video and/or audio signal or a characteristic part of said section is displayed on a screen.

13. Method according to claim 12, wherein editing related metadata representing said section are also displayed.

14. Method according to claim 11, wherein said received information marks whether the probably disturbed or failed section is in fact disturbed or failed.

15. Apparatus for generating editing related metadata for a video and/or audio signal, comprising:
means for receiving a video and/or audio signal;
means for analyzing successive parts of said received video and/or audio signal for the automatic detection of a probably disturbed or failed section of said video and/or audio signal;
means for generating editing related metadata representing a detected probably disturbed or failed section of said video and/or audio signal, wherein said editing related metadata comprise the location of said detected probably disturbed or failed section within said video and/or audio signal; and
means for storing said editing related metadata.

16. Apparatus for editing a recorded video and/or audio signal using editing related metadata, comprising:
means for reading editing related metadata representing a probably disturbed or failed section of a recorded video and/or audio signal, wherein said editing related metadata have been generated during recording of said recorded video and/or audio signal and comprise the location of said probably disturbed or failed section within said recorded video and/or audio signal;
means for accessing the probably disturbed or failed section of said recorded video and/or audio signal by using said editing related metadata; and
means for editing said probably disturbed or failed section of said recorded video and/or audio signal.
